# EUROPEAN PATENT APPLICATION

(11) **EP 2 620 753 A1**
(43) Date of publication of application: **31.07.2013**
(21) Application number: 12152290.8
(22) Date of filing: 24.01.2012
(51) Int. Cl.: G01D 5/353, G02B 6/12, G02B 6/293

(54) **Optical determination arrangement for analysis of optical signals, and optical sensing system**

(71) Applicant: Nederlandse Organisatie voor Toegepast -Natuurwetenschappelijk Onderzoek TNO, 2628 VK Delft (NL)
(72) Inventor: Harmsma, Peter Johan, 2628 VK Delft (NL); Dunias, Paraskevas, 2628 VK Delft (NL)
(74) Representative: Jansen, Cornelis Marinus

(57) **Abstract**

The invention in particular provides an optical determination arrangement (40) for enabling determination and analysis of a plurality of output signals of optical nature, wherein each one of said output signals comprises light of a unique optical wavelength assigned to said output signal. The arrangement comprises a multiplexing unit (50) for multiplexing the output signals into a common signal, and a receiver unit (85) for receiving said common signal and for determination of said output signals comprised by said common signal for enabling analysis thereof. In particular, the determination arrangement (40) comprises a modulator unit for modulating each one of said output signals with a unique modulator signal assigned to each output signal. Furthermore, the receiver unit (85), for enabling said determination, comprises a demodulator unit for demodulating each one of said output signals from said common signal using said modulator signal.

## Description

### Field of the invention

The present invention is directed to an optical determination arrangement for enabling determination and analysis of a plurality of output signals of optical nature, wherein each one of said output signals comprises light of a unique optical wavelength assigned to said output signal, said determination arrangement comprising a multiplexing unit for multiplexing said output signals into a common signal, and a receiver unit for receiving said common signal and for determination of said output signals comprised by said common signal for enabling analysis thereof. The invention is further directed to an optical sensing system comprising an arrangement as described above.

### Background

Optical sensing systems, by its nature directed to a large variety of optical measuring techniques, have many applications in all kinds of industries. Such applications for example range from structural integrity monitoring of structures (such as windmills, airplanes, (boat) hulls, dikes, buildings, etc.), to spectral analysis (such as performed for telescopes, satellites, material analysis, laser doppler, etc.), and control systems using optical methods to monitor certain parameters that need to be controlled.

Often, such optical sensing systems require monitoring or analysis of the output signals of a plurality of optical sensors. In such systems, use may be made of wavelength division multiplexing techniques, assigning a unique wavelength to the optical output signal of each of the optical sensors. Moreover, for some applications, for example in spectral analysis, characteristics of a signal at a plurality of wavelengths or wavelength ranges is to be monitored (even if the signal to be analyzed may originate from a single sensor). Although wavelength division multiplexing may be a suitable way of enabling the simultaneous and combined monitoring of a number of optical sensors over time, the decomposing of all the optical output signals usually requires a complex set-up of demultiplexers, interferometers, and photo-electric converters such as photo diodes.

### Summary of the invention

It is an object of the present invention to obviate the abovementioned disadvantages, and to enable determination of optical output signals by means of an arrangement having as few optical elements as possible.

The above mentioned objects of the invention are achieved in that there is provided an optical determination arrangement in accordance with claim 1. Specific advantageous embodiments of this arrangement in accordance with the invention are defined in the dependent claims.

The invention in particular provides an optical determination arrangement for enabling determination and analysis of a plurality of output signals of optical nature, wherein each one of said output signals comprises light of a unique optical wavelength assigned to said output signal. The arrangement comprises a multiplexing unit for multiplexing the output signals into a common signal, and a receiver unit for receiving said common signal and for determination of said output signals comprised by said common signal for enabling analysis thereof. In particular, the determination arrangement comprises a modulator unit for modulating each one of said output signals with a unique modulator signal assigned to that output signal. Furthermore, the receiver unit, for enabling said determination, comprises a demodulator unit for demodulating each one of said output signals from said common signal using said modulator signal.

The invention applies a unique modulator signal to each output signal, which leaves a signature associated with each output signal in the common signal. The signatures, which are collectively present in the common signal, enable decomposition of the output signals from the common signal, e.g. by applying suitable decomposition techniques. This considerably simplifies the design of systems such as spectral analyzers, or systems comprising a plurality of sensors to be monitored. As will be explained, the number of components for decomposition of the multiplexed output signals from the common signal can be reduced considerably. In preferred embodiments, decomposition may even be performed electronically rather than optically.

For decomposing the output signals from the common signal, suitable filter techniques may be applied. Since the modulation signal leave a recognizable signature within the common signal, standard filter techniques may be used for decomposing the output signals. The demodulator unit thereto comprises a filter arrangement for transmitting each one of said output signals in a unique signal channel, by transmitting in each signal channel said output signal modulated with a corresponding modulation signal as assigned to said signal channel.

The modulator unit may for example modulate each of the output signals with a carrier wave of a particular frequency. This frequency may be a very low, low or medium radio frequency, e.g. smaller than 1 MHz. In particular, prior to multiplexing into the common signal, each output signal may be intensity modulated using amplitude modulation. In that case, even after conversion to an electrical signal, the common signal may be decomposed without much burden by filtering for each modulation frequency using for example band pass filters or the like. Filtering may also be performed based on the phase of the modulation signal, e.g. when a block signal is used having for each output signal non-zero values that do not overlap with the non-zero values for other output signals, and keeping the various filters in sync with the modulator. The latter may even provide an implementation having a serial output to an analysis system if this is for any reason desired.

Preferably, the modulator signals for modulating each of the output signals are such that the signal are even separable or decomposable after the common signal (which is primarily of an optical nature) is converted into an electrical common signal, e.g. by means of a photo diode.

The determination arrangement may be implemented in any kind of sensing system. The input signal to the determination arrangement may itself already be multiplexed, in which case an additional demultiplexer may be required prior to modulating the output signals. Moreover, using an optical circulator and an arrayed waveguide grating (AWG), an embodiment is achieved wherein the AWG is used both as demultiplexer prior to modulating and as multiplexer after modulating. To this end, instead of an arrayed waveguide grating this may also be implemented using a planar concave grating or echelle grating. The circulator enables to forward the common signal after modulating and multiplexing to the receiver unit.

### Brief description of the drawings

The invention will further be elucidated by description of some specific embodiments thereof, making reference to the attached drawings, wherein:
Figure 1 schematically illustrates a spectrum analyzer design of the prior art;
Figure 2 schematically illustrates a sensing system based on a plurality of fiber Bragg grating (FBG) in accordance with the prior art;
Figure 3 schematically illustrates further sensing systems based on ring resonators in accordance with the prior art;
Figure 4 illustrates a determination arrangement in accordance with the present invention;
Figure 5 illustrates a further embodiment of a determination arrangement in accordance with the present invention;
Figure 6 illustrates a sensing system in accordance with the present invention based on ring resonators;
Figure 7 illustrates an optical sensing system in accordance with the present invention based on fiber Bragg gratings (FBG).

### Detailed description

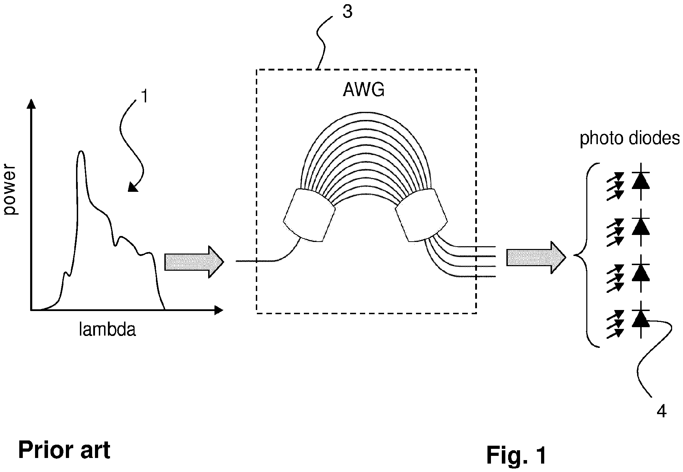

Figure 1 illustrates a spectrum analyzer based on an arrayed waveguide grating in accordance with the prior art. In Figure 1, the arrayed waveguide grating (AWG) 3 receives at an input side an optical signal 1 of which the power spectrum dependent on the wavelength is schematically given. As is known to the skilled person, the arrayed waveguide grating 3 enables to split the incoming optical signal into a plurality of optical signals having a unique wavelength (or wavelength range) in a plurality of channels (right hand side of the AWG 3 in Figure 1). In the schematic illustration of Figure 1, these channels are then analyzed using a plurality of photodiodes, such as photodiode 4, enabling determination of the power distribution across the various wavelengths. Each photodiode 4 receives light from one of the channels of the arrayed waveguide 3, and converts it into an electrical signal. The intensity of the electrical signal of each photodiode is a measure of the amount of power received, thus enabling to create the power spectrum.

The implementation of figure 1 requires optoelectronic components (photodiodes) at each output channel of AWG 3 in order to enable analysis and determination of the optical power in each channel. Although for a spectral analyzer this may not seem to be a major implementation issue, it disqualifies the multichannel approach for many other type of measurements.

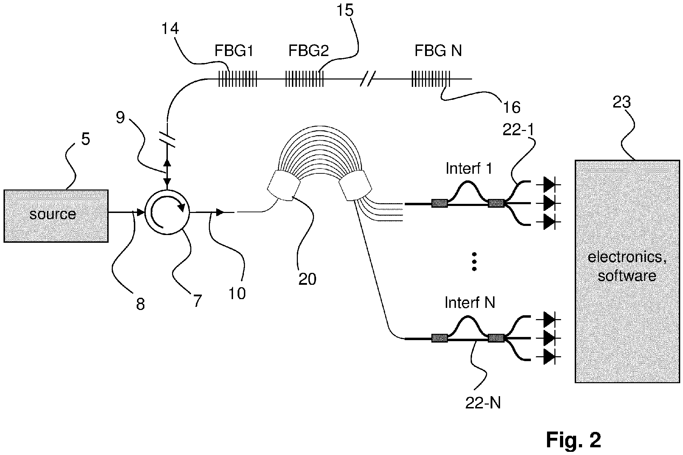

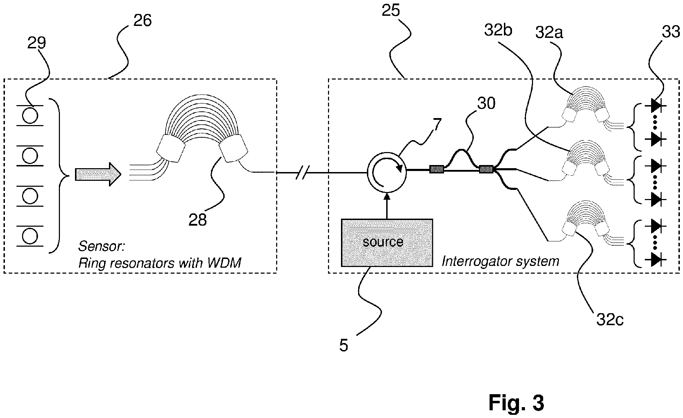

For example, two hypothetic multichannel implementations for analyzing the signal of a plurality of optical sensors (such as fiber Bragg gratings or ring resonators) are illustrated in figure 2 and 3. Note that with some straightforward modifications such as the presence or absence of an additional AWG at the input side, the hypothetical implementations of figure 2 and 3 could be applied to fiber Bragg gratings as well as ring resonators, at the choice of the designer.

Figure 2 schematically illustrates an optical sensing system. The sensor parts of the optical sensing system are formed by the fiber Bragg gratings (14, 15, 16, FBG1 14, FBG2 15 through FBGN 16). Any desired number of fiber Bragg gratings may be used in such an optical sensing system, but for reasons of clarity in Figure 2 only three fiber Bragg gratings FBG1, FBG2 and FBGN are illustrated. The other parts of the optical sensing system of Figure 2 (excluding the fiber Bragg gratings described above) form the interrogator system. The interrogator system provides the source signal for feeding the sensors, and receives the returning signal or signals from the sensors, preparing them for further processing. In Figure 2, an optical source 5 provides an optical feed signal to a first port 8 of an optical circulator 7.

As will be appreciated, in optical circulator 7, the incoming feed signal at first port 8 leaves the circulator again at second port 9. The exact functioning of this circulator and other known optical units is not explained in detail in this document, and will be known to the skilled reader.

The optical feed signal then travels through the fiber Bragg gratings FBG1, FBG2,...., FBGN (14, 15, 16). The fiber Bragg gratings are formed by periodic variations in the refractive index of a fiber such that each fiber Bragg grating reflects an optical signal having a specific wavelength. A change in the periodicity of the refractive index, for example caused by an extension of the fiber as a result of a force exerted thereon, results in a change of the reflected wavelength which can be detected at the output. As a result of using a plurality of fiber Bragg gratings FBG1... FBGN, a plurality of output signals of a unique wavelength, as determined by the properties of each FBG, is received back at the second port 9 of the circulator 7.

The optical circulator 7 forwards the output signals of the fiber Bragg gratings FBG1 14,....,FBGN 16 to the third port 10 of the circulator 7. The third port 10 of the circulator 7 is connected to an arrayed waveguide grating 20 which splits the signal into a plurality of different output signals having each a specific wavelength range. The output channels of the arrayed waveguide grating 20 are then provided to a plurality of interferometers 22-1 through 22-N. In the embodiment of Figure 2, the interferometers used are so called 3-port interferometers which enable very accurate determination of the specific wavelength reflected by each fiber Bragg grating, i.e. each output signal received through the channels of AWG 20. The electronic system and software 23 further processes the signals received at 3-port interferometers 22-1 through 22-N.

Figure 3 schematically illustrates a further optical sensing system. The optical sensing system in Figure 3 is based on a plurality of ring resonators 29 used as sensors. Again, the optical sensing system of Figure 3 comprises a sensor arrangement 26 and an interrogator system 25. In the interrogator system, the optical input source 5 provides an optical feed system through optical circulator 7 to arrayed waveguide grating 28 in sensing arrangement 26. The various channels of the arrayed waveguide grating 28 are connected to the ring resonators 29 used as optical sensors. Back from the optical ring resonators 29, the plurality of optical output signals is received through the arrayed waveguide grating 28 and forwarded via the optical circulator 7 to a 3-port interferometer 30. Then, in order to accurately determine the optical characteristics of each of the output signals, a plurality of arrayed waveguide gratings (AWG's) 32a, 32b and 32c are connected to the output ports of the 3-ports interferometer 30. On their turn, the arrayed waveguide gratings 32a, 32b and 32c distribute their output signals to a multitude of photodiodes 33 which are monitored by an electrical system and software for further analysis (not shown).

As will be appreciated from studying the prior art solution illustrated in figure 1, and the hypothetical multichannel sensing systems proposed in figure 2 and figure 3, it is clear that a large number of optical and opto-electronic components is required for the analysis of the various optical signals received in each wavelength range. In Figure 1, which resembles a relatively basic system, a large number of photodiodes is required for enabling a detailed spectral analysis at high resolution. In Figure 2, a large number of interferometers 22-1 through 22-N is required for analyzing each of the output channels of the arrayed waveguide grating 20. In Figure 3, a single interferometer 30 is used, but in that case it is necessary to install three arrayed waveguide gratings 32a, 32b and 32c, and all output channels of all arrayed waveguide gratings are connected to a respective photodiode 33 for conversion of the signal into an electrical signal. The prior art solutions leave the choice of either using a single arrayed waveguide grating and a plurality of interferometers, such as in Figure 2, or a single interferometer and a plurality of waveguide gratings and many photodiodes as in Figure 3, to the designer. The figures only show the vast amount of optical components, but one can imagine that behind each photodiode at the receiver side, the electronic signal must be received through a dedicated channel and sampled and analyzed separately by the electronic analyzing system.

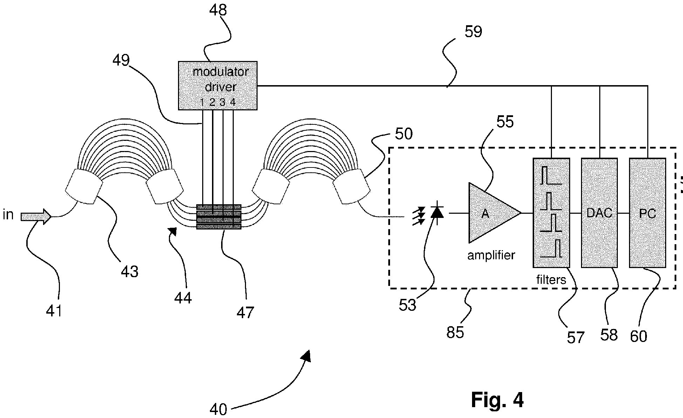

An optical determination arrangement 40 in accordance with the principles of the present invention is illustrated in Figure 4. The invention resolves the problems illustrated above by modulating each of the output signals in the corresponding wavelength ranges using a unique modulator signal assigned to each output signal. In Figure 4, an input signal 41 is (for the given example) received by the determination arrangement 40. The arrayed waveguide grating 43 demultiplexed the optical input signal, and distributes the various wavelength ranges across a number of channels 44. In the schematic illustration of Figure 4, the AWG 43 has four channels, but the skilled person will appreciate that any number of channels is possible at the choice of the skilled person. The modulator unit consists of a modulator driver 48, a number of driver channels 49 and the modulators 47 installed in each channel 44. The modulator driver 48 makes sure that a unique specific modulation signal is used in each driver channel 49 for modulating the optical signal in each of the channels in accordance with the unique modulation signal assigned to the output signal in the channel 44. For example, the modulator driver 48 may modulate the optical signals in channels 44 using carrier waives having a specific unique carrier frequency which is assigned to each of the channels. The modulators 47 may perform an amplitude modulation or intensity modulation of the optical signal based on the modulation signal received through the driver channel 49. Examples of how such modulation may be achieved are provided further on in this document. The modulated signals are then transmitted to a further arrayed waveguide grating 50 which functions as a multiplexer for multiplexing all of the various output signals into a common signal at the output of AWG 50. This signal is then provided to a receiver unit 85 comprising photodiode 53 which converts the common signal into an electrical common signal which is amplified using amplifier 55.

A filter arrangement 57 receives the electrical common signal from the amplifier 55 and uses the modulator signals received from the modulator driver 48 in order to decompose the various output signals from the electrical common signal received. Analog to digital, and digital to analog convertor (DAC) 58 and computer systems 60 enable to perform further analysis of the output signals received from filter arrangement 57.

As will be appreciated, in case the modulated driver uses modulation signals for performing amplitude modulation with given unique carrier frequencies, the filters 57 may be implemented as band pass filters for transmitting only the characteristic frequency of each output signal for decomposing the output signals from the common signal. In an embodiment wherein the modulated driver uses a phase shifted block wave of a certain characteristic, wherein each of the modulators 47 receives a block wave which has non zero values that are non overlapping with the non zero values for the other output signals, the filter arrangements 57 may simply be synchronized with the modulator driver for allowing serial decomposition of each of the output signals from the common signal. In other words, the filter arrangement 57 then subsequently receives the common signal which is characteristic for a certain output signal during a certain time frame.

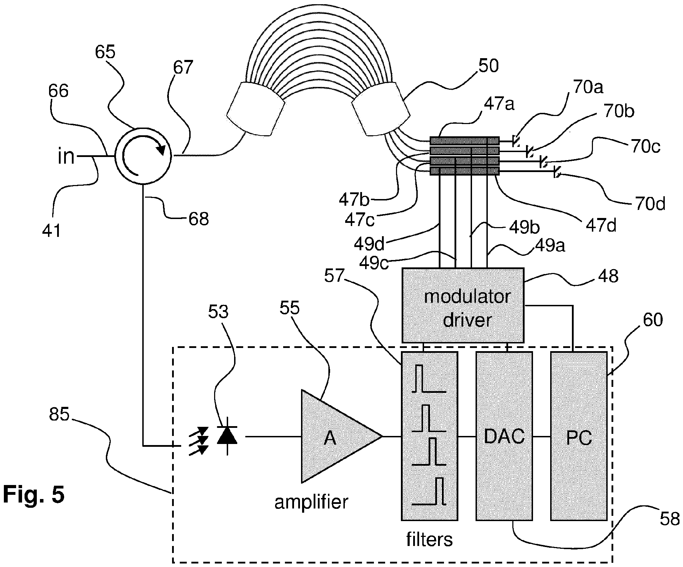

A further embodiment of a determination arrangement in accordance with the present invention is illustrated in Figure 5. Reference numerals which indicate elements having a same of similar function as corresponding elements in other embodiments are kept the same throughout each of the figures. In Figure 5, input signal 41 is received at optical circulator 65. The optical circulator 65 forwards the input signal 41 from the first port 66 to the second port 67 which is connected to the arrayed waveguide grating 50. The arrayed waveguide grating distributes the various wavelength bands across a number of channels, and provides them to a plurality of modulators 47a through 47d. At the output of each of the modulators 47a, 47b, 47c and 47d, a plurality of reflective elements 70a, 70b, 70c and 70d is connected respectively. The reflective elements 70a through 70d in the present example may be formed by mirror elements. The modulated output signals are then fed back to the arrayed waveguide grating 50, multiplexing them into a common or composite optical signal provided to second port 67.

The optical circulator 65 then formed the common signal to third port 68, which in turn feeds the common signal of optical nature to the receiver unit 85, comprising photodiode 53. The photodiode 53 converts the common signal into an electrical common signal and provides it to an amplifier 55. Similar to the manner described above with respect to Figure 4, the electrical common signal is then provided to the filter arrangement 57 and the analog to digital and digital to analog convertor 58 and computer 60 for further analysis. Since the embodiment of Figure 5 splits the input signal 41 into a plurality of output signals with respective wavelength bands, and enables to detect each of these separately, this design may be used as a spectral analyzer.

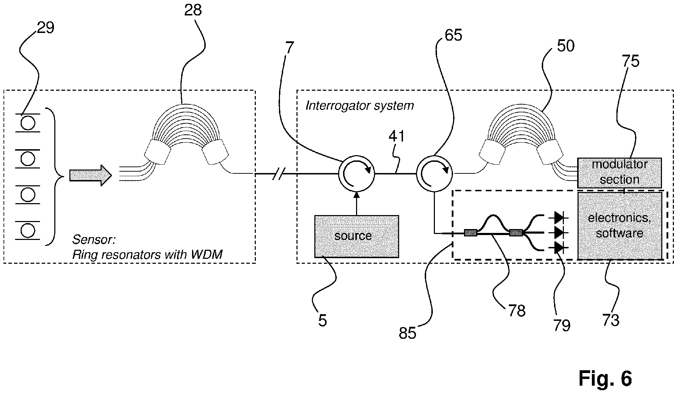

Figure 6 illustrates a further embodiment of the present invention, comparable to the optical sensing system of Figure 3, but then using an interrogator system and optical determination arrangement in accordance with the present invention. In Figure 6, again an optical feed signal is provided by source 5 to optical circulator 7, which is distributed via arrayed waveguide grating 28 to a plurality of optical ring resonators 29. The return signal of the optical ring resonators (the output signals from the sensors) are provided back to the arrayed waveguide grating 28, and are therefore multiplexed into a input signal 41 which is forwarded by optical circulator 7 to optical circulator 65. Optical circulator 65 forwards the input signal 41 to the arrayed waveguide grating 50 which demultiplexed the input signal 41 and provides it to the modulator section 75 of the arrangement. After modulation by the modulators section 75, the optical output signals are received by the arrayed waveguide grating 50 and multiplexed into a common optical signal provided to the optical circulator 65. The optical circulator 65 then provides the common optical signal to the receiver unit 85, comprising 3-port interferometer 78. The three outputs of the 3-port interferometer 78 are received at photodiodes 79 providing their electric signal to the electronic system 73 for further analysis.

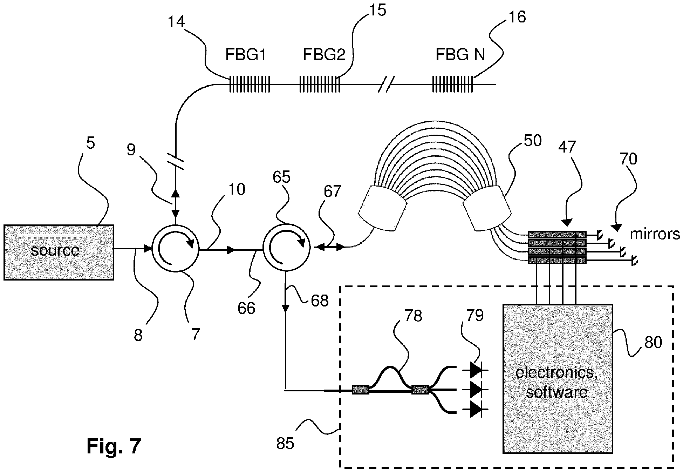

Figure 7 illustrates a further embodiment of an arrangement in accordance with the present invention. In Figure 7, the arrangement illustrated is comparable to the optical sensing system of Figure 2, but then using an interrogator system and optical determination system in accordance with the present invention. In the embodiment of Figure 7, a source 5 provides an optical feed signal to the first import 8 of the optical circulator 7. The optical circulator 7 provides the feed signal through the second port 9 to a number of fiber Bragg gratings 14, 15 and 16 (FBG1, FBG2,....,FBGN). The reflected signals from the fiber Bragg gratings 14, 15 and 16 are then received back at the second port 9 of the optical circulator 7, and are forwarded to the third port 10. From there, the return signals are received as an input signal on the first port 66 of optical circulator 65. Optical circulator 65 provides the input signal through second port 67 to arrayed waveguide grating 50. In arrayed waveguide grating 50, the input signal is demultiplexed into a plurality of channels and provided to modulators 47. The modulators 47 modulate the output signals in accordance with the principles of the present invention. The mirror elements 70 reflect the modulated output signals providing them back to the arrayed waveguide grating 50. The AWG 50 multiplexes the output signal into a common signal providing it to second port 67 of optical circulator 65, which forwards the common signal on third port 68 to the receiver unit 85, comprising 3-port interferometer 78. Photodiodes 79 receive the various optical signals from the output of the interferometer 78, and convert these signals to electrical signals that can be analyzed in processing system 80.

The modulator unit 47 may be implemented using any suitable manner. For example, the modulator unit 47 may consist of reversed biased p-n junctions which are embedded in a waveguide structure, inside a Mach Zehnder interferometer (MZI). As an alternative, optical amplifiers may be applied for modulating the optical signals. As will be appreciated if the optical amplifiers are biased at a specific current (typically a few tens of mA), the semiconductor optical amplifiers will become transparent and provide optical amplification (proportional to the supply current). Unbiased, or reversed biased, the optical amplifiers may effectively absorb all the light, leaving the output dark. As a result, in case a variable supply current is used for powering the optical amplifiers, each of the optical amplifiers can be used for modulating the intensity of an optical signal because the optical amplification will vary accordingly. If this is performed at a certain frequency (e.g. <1MHz, and a unique frequency for each output signal), the used frequency can be decomposed by using a bound pass filter on the electrical common signal for the given frequency.

In general, even in the prior art embodiment of figure 1 resembling a spectral analyzer, the use of an optical sensing system in accordance with the invention provides benefits. In a single detector one can apply a high-performance detector with superior performance (speed, dark current, responsivity, optical bandwidth), which can even be cooled to reduce noise. Connecting to multiple discrete high-end detectors is challenging. Moreover, multiple detectors may be monolithically integrated on chip for some wavelength ranges and material systems (Indium Phosphide of SOI based devices at 1.3 - 1.6 um wavelength) but the integration will cause a penalty in performance. In particular the dark current is a problem. Also, the integration of detectors may not be possible at all, for example if the application is for visible light: the AWG can then be implemented in oxide/nitride based materials, which is incompatible with monolithic detector integration. The same holds for long-wavelength applications (e.g. wavelengths > 2 um). Those wavelengths typically call for high-end detectors, preferably cooled. As a result the application of an optical sensing system in accordance with the invention can also be applied to a spectral analyzer.

The present invention has been described in terms of some specific embodiments thereof. It will be appreciated that the embodiments shown in the drawings and described here and above are intended for illustrative purposes only, and are not by any manner or means intended to be restrictive on the invention. For example, the embodiments described refer to implementation in integrated optics. It will be appreciated that implementation in other optical technologies (free space optics) is possible as well. Moreover, it will also be appreciated that any filtering performed my be implemented by means of suitable software or hardware units at the designer's choice. For the implementation of a multiplexer (and demultiplexer) unit, use can be made of an arrayed waveguide grating, or a planar concave grating or echelle grating, or any other suitable element available to the skilled person. Also, the invention has been explained using sensors such as ring resonators and fiber Bragg gratings. However, other sensors, such as Fabry-Perot cavities may also be applied. The invention is not limited to the type of sensor to which it is applied here. The context of the invention discussed here is merely restricted by the scope of the appended claims.

## Claims

1. Optical determination arrangement for enabling determination and analysis of a plurality of output signals of optical nature, wherein each one of said output signals comprises light of a unique optical wavelength assigned to said output signal, said determination arrangement comprising a multiplexing unit for multiplexing said output signals into a common signal, and a receiver unit for receiving said common signal and for determination of said output signals comprised by said common signal for enabling analysis thereof, **characterized in that**, said determination arrangement further comprises a modulator unit for modulating each one of said output signals with a unique modulator signal assigned to said output signal, wherein said receiver unit for enabling said determination comprises a demodulator unit for demodulating each one of said output signals from said common signal using said modulator signal.

2. Optical determination arrangement in accordance with claim 1, wherein said demodulator unit comprises a filter arrangement for transmitting each one of said output signals in a unique signal channel by transmitting in each signal channel said output signal modulated with a corresponding modulation signal as assigned to said signal channel.

3. Optical determination arrangement in accordance with any of the previous claims, wherein said receiver unit comprises a photo diode for receiving said common signal of optical nature and for converting said optical common signal into an electrical common signal.

4. Optical determination arrangement in accordance with claim 3, wherein said receiver unit further comprises an interferometer unit.

5. Optical determination arrangement in accordance with claim 4, wherein said interferometer unit is one of a group comprising a two port interferometer, a three port interferometer, a Michelson interferometer, a Mach-Zehnder interferometer.

6. Optical determination arrangement in accordance with any of the previous claims, wherein said modulator unit is arranged for modulating said output signals by means of amplitude modulation for modulating the intensity of each output signal of optical nature.

7. Optical determination arrangement according to any of the previous claims, wherein said modulator signals used by said modulator unit are carrier waves having a unique frequency assigned to each one of said output signals.

8. Optical determination arrangement in accordance with claim 7, wherein said frequencies of said carrier waves are below 1 MHz.

9. Optical determination arrangement in accordance with claim 2, and any one or more of claims 7 and 8, wherein said filter arrangement comprises band pass filters for transmitting each of said unique frequencies at a corresponding signal channel for said output signal associated with said unique frequency.

10. Optical determination arrangement in accordance with any of the previous claims, wherein said modulator unit is arranged for modulating each one of said output signals using a unique modulator signals, said modulator signals comprising mutually phase shifted block waves for subsequently transmitting each of said output signals, wherein said demodulator unit is synchronized with said block waves for subsequently receiving said output signals.

11. Optical determination arrangement in accordance with any of the previous claims, wherein said determination arrangement further comprises an input port for receiving an input signal of optical nature, said input port being connected to a first port of an optical circulator, wherein a second port of said circulator is connected to said multiplexer unit for demultiplexing said input signal into said plurality of output signals, wherein said multiplexer unit is further connected to said modulator unit, and wherein a third port of said optical circulator is connected to said receiver unit, and wherein said modulator unit comprises means for reflecting said output signals back to said multiplexer unit, and wherein said multiplexer unit is an arrayed waveguide grating or a planar concave grating.

12. Optical sensing system comprising a plurality of optical sensors, wherein each of said optical sensors is arranged for providing a sensor output signal at an optical wavelength corresponding to said optical sensor, said optical sensing system comprising an optical determination arrangement in accordance with any of the previous claims for enabling determination and analysis of each of said sensor output signals.

13. Optical sensing system in accordance with claim 12, wherein said sensing system is arranged for providing said sensor output signal combined within a single input signal, and wherein said determination arrangement is an arrangement in accordance with claim 11.

14. Optical sensing system in accordance with claims 12 or 13, wherein said optical sensors are one or more elements of a group comprising fiber Bragg gratings, optical ring resonators, optical receiver systems for receiving an exterior optical signal and for transmitting at least a part of said exterior optical signal through a waveguide.
